Europäisches Patentamt

European Patent Office

Office européen des brevets

(19)

(11) Veröffentlichungsnummer: **0 320 606 B1**

# (12) EUROPÄISCHE PATENTSCHRIFT

(45) Veröffentlichungstag der Patentschrift: **18.12.91**

(51) Int. Cl.⁵: **B60T 17/08**

(21) Anmeldenummer: **88117910.5**

(22) Anmeldetag: **27.10.88**

(54) **Über eine Atmungsöffnung mit der Umgebung verbundene Kammer.**

(30) Priorität: **14.12.87 DE 3742343**

(43) Veröffentlichungstag der Anmeldung:
**21.06.89 Patentblatt 89/25**

(45) Bekanntmachung des Hinweises auf die
Patenterteilung:
**18.12.91 Patentblatt 91/51**

(84) Benannte Vertragsstaaten:
**DE FR GB NL SE**

(56) Entgegenhaltungen:
**DE-A- 2 458 436**
**DE-A- 2 462 385**
**DE-A- 3 315 174**
**DE-B- 2 633 176**

(73) Patentinhaber: **WABCO Westinghouse Fahr-**
**zeugbremsen GmbH**
**Am Lindener Hafen 21 Postfach 91 12 80**
**W-3000 Hannover 91(DE)**

(72) Erfinder: **Goral, Erhard**
**Adlerstrasse 7**
**W-3150 Peine(DE)**
Erfinder: **Mensing, Walter**
**An der Halbe 28**
**W-3017 Pattensen(DE)**

(74) Vertreter: **Schrödter, Manfred**
**WABCO Westinghouse Fahrzeugbremsen**
**GmbH Am Lindener Hafen 21 Postfach 91 12**
**80**
**W-3000 Hannover 91(DE)**

EP 0 320 606 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Über eine Atmungsöffnung und einen der Atmungsöffnung vorgeschalteten Beatmungsraum mit der Umgebung verbundene Kammer nach dem Oberbegriff des Patentanspruchs 1.

Eine über eine Atmungsöffnung mit der Umgebung verbundene Kammer ist als Atmosphärenkammer eines Membranzylinders aus der WABCO-Druckschrift "Membranzylinder 423 000 Teil 2", Ausgabe 01.79, bekannt. Diese Kammer ist dort über eine mit C bezeichnete Atmungsöffnung mit der Umgebung verbunden. Über diese Atmungsöffnung wird bei Temperaturänderungen innerhalb der Kammer sowie bei Größenänderungen der Kammer infolge Betätigung des Membranzylinders der Umgebungsdruck in der Kammer aufrechterhalten. Mit anderen Worten: Die Kammer wird über die Atmungsöffnung beatmet. Durch die Atmungsöffnung, insbesondere mit dem bei der Beatmung eintretenden Umgebungsmedium, treten Feststoff-, Flüssigkeits- und Dampfpartikel in die Kammer ein und können dort Störungen, insbesondere an in der Kammer angeordneten Bauteilen, verursachen.

Aus der DE-A-24 58 436 ist als Federkammer eines kombinierten Federspeicherbremszylinder eine Kammer der eingangs genannten Art bekannt, bei welcher der der Atmungsöffnung vorgeschaltete, zur Umgebung offene Beatmungsraum dem Schutze der Kammer vor dem Zutritt von Feststoff-, Flüssigkeits- und Dampfpartikeln dient. In diesem Falle ist die Verbindung zwischen der Kammer und dem Beatmungsraum normalerweise durch eine Klappe verschlossen, die jedoch unter nicht näher angegebenen Bedingungen nachgeben soll, so daß Feuchtigkeit entweichen kann.

Die bekannte Lösung ist aufgrund der Klappe aufwendig. Auch besteht wegen der nicht näher definierten Bedingungen für das Nachgeben der Klappe die Gefahr, daß dieses Nachgeben nicht zuverlässig erfolgt.

Der Erfindung liegt deshalb die Aufgabe zugrunde, die dem Schutze der eingangs erwähnten Kammer dienenden Bestandteile derselben zu vereinfachen und ihre Zuverlässigkeit zu erhöhen.

Diese Aufgabe wird durch die in dem Patentanspruch 1 angegebene Erfindung gelöst. Weiterbildungen und vorteilhafte Ausgestaltungen sind in den Unteransprüchen angegeben.

Der erfindungsgemäße Beatmungsraum kann in einem Gehäuse aus jeder geeigneten Art Werkstoff angeordnet sein. Beispielhaft seien metallische Werkstoffe und Gummi sowie Kunststoffe genannt. Mit Werkstoffen der zuletzt genannten Arten läßt sich die Erfindung besonders kostengünstig realisieren.

Die Atmungsöffnung kann direkt in den Beatmungsraum münden. Der Beatmungsraum kann aber auch über einen Stutzen mit der Kammer verbunden sein, in welchem Falle dessen Durchgang, d.h. dessen lichter Querschnitt, die Atmungsöffnung bildet.

Weitere Vorteile der Erfindung werden bei der nachfolgenden Erläuterung der Erfindung anhand von in Zeichnungen dargestellten Ausführungsbeispielen genannt.

Es zeigen:

**Fig. 1**
eine in einem kombinierten Federspeicherbremszylinder angeordnete Kammer mit einem Beatmungsraum,

**Fig. 2 Fig. 3 Fig. 4**
ausschnittsweise andere Ausgestaltungen der Kammer mit Beatmungsraum.

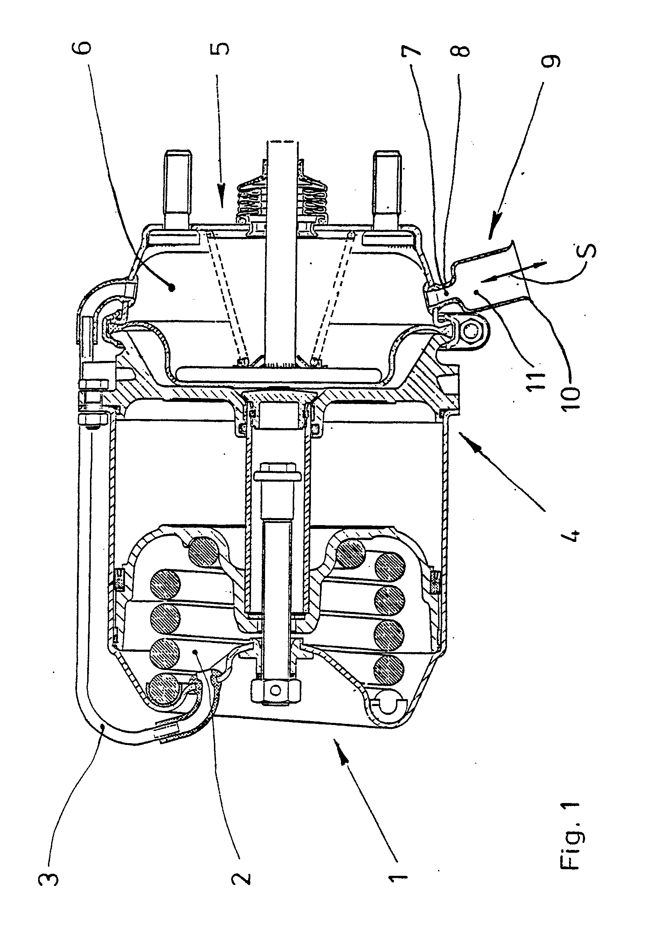

Der in Fig. 1 dargestellte, generell mit (4) bezeichnete, kombinierte Federspeicherbremszylinder besteht aus einem Federspeicherteil (1) und einem als Membranzylinder ausgebildeten Betriebsbremsteil (5). Sowohl der Federspeicherbremszylinder (4) insgesamt als auch seine Bestandteile sind in bekannter und daher nicht näher beschriebener Weise aufgebaut.

Der Betriebsbremsteil (5) weist, wie üblich, eine Atmosphärenkammer auf, die eine Kammer (6) darstellt, welche über eine Atmungsöffnung (7) mit der Umgebung verbunden ist. Mit der Kammer (6) ist über eine Rohrverbindung (3) eine Federkammer (2) des Federspeicherteils (1) verbunden. Die Atmungsöffnung (7) dient der Beatmung der Kammer (6), d.h. der Aufrechterhaltung des Umgebungsdrucks in derselben, wenn diese bei Betätigung des Betriebsbremsteils (5) und/oder des Federspeicherteils (1) ihr Volumen verändert oder wenn der Druck in derselben infolge von Temperaturveränderungen innerhalb der Kammer (6) und/oder in der Federkammer (2) vom Niveau des Umgebungsdrucks abzuweichen trachtet.

Der Atmungsöffnung (7) ist ein zur Umgebung offener Beatmungsraum (11) vorgeschaltet, der in einem generell mit (9) bezeichneten Gehäuse untergebracht ist. Der Beatmungsraum (11) ist mit der Kammer (6) mittels eines Stutzens (8) verbunden, dessen Durchgang die Atmungsöffnung (7) bildet.

Der Beatmungsraum (11) weist zur Umgebung hin einen Eintrittsquerschnitt von der 4- bis 25-fachen Größe des Querschnitts der Atmungsöffnung (7) auf. Die Querschnitte des Beatmungsraums (11) und der Atmungsöffnung (7) können beliebig gestaltet sein. Sind diese Querschnitte Kreise oder legt man ihnen flächengleiche Kreise zugrunde, so entspricht dem soeben erwähnten Flächenverhältnis ein Durchmesserverhältnis von 2 bis 5. Das Verhältnis zwischen der Länge des Beatmungsraums (11), in der generellen Strömungsrichtung (S) des Umgebungsmediums gesehen, zum Durchmesser des Eintrittsquerschnitts bzw. des flächengleichen Kreises beträgt wenigstens 0,6.

Es hat sich gezeigt, daß bei den erwähnten Flächen-bzw. Längen/Durchmesser-Verhältnissen des Beatmungsraums (11) die Kammer (6) auch über längere Betriebszeiten des Federspeicherbremszylinders (1) ganz oder weitestgehend vor dem Zutritt von angeschlenderten und/oder bei der Beatmung angesaugten Feststoff-, Flüssigkeits- und Dampfpartikeln geschützt ist. Störungen in der Kammer (6) und in der Federkammer (2), insbesondere an den in diesen untergebrachten Bauteilen, werden dadurch ebenfalls ganz oder weitestgehend vermieden.

Als optimal haben sich dabei ein Flächenverhältnis von etwa 9 bzw. ein Durchmesserverhältnis von etwa 3 und ein Längen/Durchmesser-Verhältnis von etwa 1 erwiesen. Ein optimaler absoluter Durchmesser der Atmungsöffnung ergab sich dabei von etwa 8 mm. Aber auch mit anderen Verhältnissen und/oder absoluten Maßen wurden sehr gute Ergebnisse erzielt.

Die durch die Erfindung am Zutritt zur Kammer (6) gehinderten Feststoffpartikel pflegen, sich zunächst hinter dem Eintrittsquerschnitt des Beatmungsraums (11) an dessen Wand abzusetzen.

Beim Ausatmen und/oder bei betriebsbedingten Erschütterungen pflegen diese Partikel später wieder abzufallen. Diese Wirkung wird durch eine glatte Oberfläche der Wand des Beatmungsraums (11) unterstützt. Eine besondere Wartung ist jedenfalls nicht erforderlich, da schon bei der normalen Reinigung, insbesondere wenn diese durch Abspritzen erfolgt, etwa im Beatmungsraum (11) verbliebene Restpartikel entfernt werden.

Der Beatmungsraum (11) weist an seinem der Umgebung zugewandten Ende infolge einer trompetenausgangsförmigen Ausbildung des Gehäuses (9) eine Aufweitung auf. Dadurch wird am Eintrittsquerschnitt des Beatmungsraums (11) eine Abtropfkante (10) gebildet, die den Zutritt von Flüssigkeits- und Feststoffniederschlägen die sich außen am Gehäuse (9) gebildet haben, in den Beatmungsraum (11) praktisch verhindert.

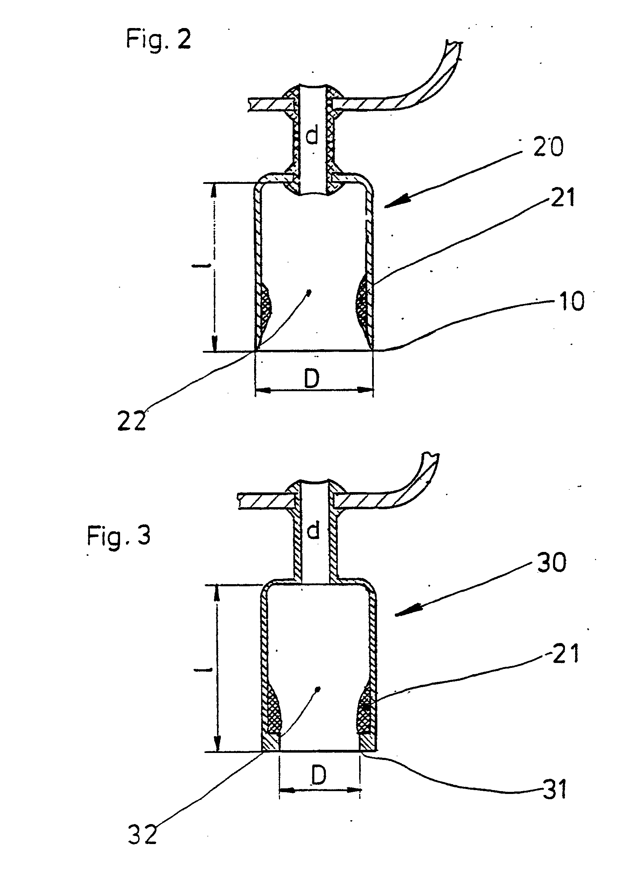

Die Fig. 2, 3 und 4 zeigen ausschnittsweise nicht näher bezeichnete Kammern mit anderen Ausbildungen des Beatmungsraums (22) bzw. (32) bzw. (41) und des Gehäuses (20) bzw. (30) bzw. (40). In diese Figuren sind mit (D) und (d) die oben definierten Durchmesser eingetragen, die die oben genannten Flächen- bzw. Durchmesserverhältnisse bestimmen. Außerdem ist in diese Figuren noch die Länge (1) eingetragen, welche das Längen/Durchmesser-Verhältnis 1/D bestimmt. Wie oben gesagt, kann D/d zwischen 2 und 5 mit einem Optimum bei 3 liegen, während 1/D wenigstens 0,6 mit einem Optimum bei 1 betragen sollte, aber auch beliebig größere Werte annehmen kann.

In Fig. 2 ist der Beatmungsraum (22) an seinem der Umgebung zugewandten Ende zur Bildung der Abtropfkante (10) ohne gleichzeitige Aufweitung des Gehäuses (20) aufgeweitet.

In Fig. 3 ist der Beatmungsraum (32), ebenfalls zur Bildung einer Abtropfkante (31), an seinem der Umgebung zugewandten Ende eingezogen.

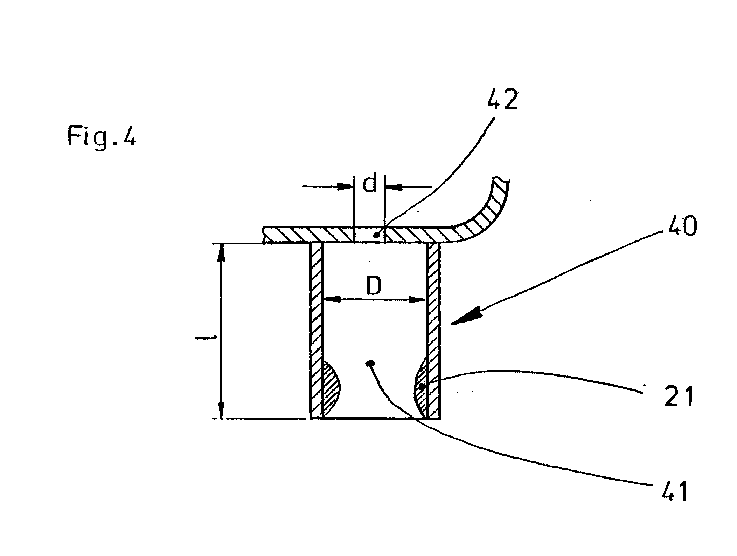

In Fig. 4 ist das den Beatmungsraum (41) aufnehmende Gehäuse (40) rohrförmig ohne besondere Abtropfkante ausgebildet und ohne Zwischenschaltung eines Stutzens direkt auf das die Kammer beherbergende Gehäuse aufgesetzt, derart, daß die Atmungsöffnung (42) direkt in den Beatmungsraum mündet.

In den Fig. 2 bis 4 ist noch, mit (21) bezeichnet, der Bereich der Wandung des Beatmungsraums angegeben, indem sich die zurückgehaltenen Fremdstoffpartikel üblicherweise abzusetzen beginnen.

In den Fig. 1 bis 3 sind die Gehäuse (9) bzw. (20) bzw. (30) in Formen dargestellt, die sich vorteilhaft aus Gummi bzw. aus Kunststoffen herstellen lassen. Diese Figuren zeigen auch vorteilhafte Ausgestaltungsmöglichkeiten des Stutzens und vorteilhafte Anschlußmöglichkeiten desselben an die Kammer und an das Gehäuse (9) bzw. (20) bzw. (30) des Beatmungsraums. In Fig. 4 ist hingegen eine Gehäuseform dargestellt, die sich einschließlich ihres Anschlusses an das die Kammer aufnehmende Gehäuse vorteilhaft aus einem metallischen Werkstoff herstellen läßt.

Im übrigen gelten die für ein Ausführungsbeispiel gemachten Ausführungen für die anderen Ausführungsbeispiele in entsprechender Anwendung mit.

Der Fachmann erkennt, daß sich der Schutzbereich der vorliegenden Erfindung nicht in den Ausführungsbeispielen erschöpft, sondern alle Ausgestaltungen erfaßt, die sich den Patentansprüchen unterordnen.

**Patentansprüche**

1. Über eine Atmungsöffnung (7; 42) und einen der Atmungsöffnung (7; 42) vorgeschalteten, zur Umgebung offenen Beatmungsraum (11, 22, 32, 41) mit der Umgebung verbundene Kammer (6) eines Bremsgerätes, dadurch gekennzeichnet, daß

   a) die Verbindung zwischen der Kammer (6) und dem Beatmungsraum (11, 22, 32, 41) ständig offen ist;

   b) der Eintrittsquerschnitt des Beatmungsraums die 4- bis 25-fache Größe des Querschnitts der Atmungsöffnung (7; 42) aufweist;

c) die Länge (1) des Beatmungsraums (11, 22, 32, 41) zu dem Durchmesser (D) des Eintrittsquerschnitts oder eines diesem flächengleichen Kreises im Verhältnis von wenigstens 0,6 steht.

2. Kammer nach Anspruch 1, dadurch gekennzeichnet, daß der Beatmungsraum (11, 22) an seinem der Umgebung zugewandten Ende eine Aufweitung (Abtropfkante 10) aufweist.

3. Kammer nach Anspruch 1, dadurch gekennzeichnet, daß der Beatmungsraum (32) an seinem der Umgebung zugewandten Ende eine Einziehung (Abtropfkante 31) aufweist.

4. Kammer nach einem der vorhergehenden Ansprüche, dadurch gekennzeichnet, daß der Beatmungsraum (11) mit der Kammer (6) über einen Stutzen (8) verbunden ist, dessen Durchgang die Atmungsöffnung (7) bildet.

## Claims

1. A chamber (6) of a braking apparatus connected to the atmosphere by way of a vent (7; 42) and a venting chamber (11, 22, 32, 41) open to the atmosphere and positioned upstream of the vent (7; 42), characterized in that
   a) the connection between the chamber (6) and the venting chamber (11, 22, 32, 41) is permanently open;
   b) the inlet cross-sectional area of the venting chamber is 4 to 25 times the cross-sectional area of the vent (7; 42);
   c) the ratio of the length (1) of the ventilation chamber (11, 22, 32, 41) to the diameter (D) of the inlet cross-section or a circle of the same area as this is at least 0.6.

2. A chamber according to claim 1, characterized in that the venting chamber (11, 22) has a widened portion (drip edge 10) at its end facing the atmosphere.

3. A chamber according to claim 1, characterized in that the venting chamber (32) has a constriction (drip edge 31) at its end facing the atmosphere.

4. A chamber according to one of the preceding claims, characterized in that the venting chamber (11) is connected to the chamber (6) by way of a connection piece (8), the passage through which forms the vent (7).

## Revendications

1. Chambre (6) d'un appareil de freinage reliée au milieu ambiant par un orifice de mise à l'air libre désigné par orifice de respiration (7; 42) et par une enceinte de respiration (11, 22, 32, 41) qui précède l'orifice de respiration (7; 42) et qui est ouverte sur le milieu ambiant, caractérisée en ce que

   a) la liaison entre la chambre (6) et l'enceinte de respiration (11, 22, 32, 41) est constamment ouverte;
   b) la section d'entrée de l'enceinte de respiration présente une grandeur qui est de 4 à 25 fois la grandeur de la section de l'orifice de respiration (7; 42);
   c) le rapport de la longueur (1) de l'enceinte de respiration (11, 22, 32, 41) sur le diamètre (D) de la section d'entrée ou d'un cercle de surface équivalente, vaut au moins 0,6.

2. Chambre selon la revendication 1, caractérisée en ce que l'enceinte de respiration (11, 22) présente, à son extrémité adjacente au milieu ambiant, un évasement (bord formant larmier 10).

3. Chambre selon la revendication 1, caractérisée en ce que l'enceinte de respiration (32) présente, à son extrémité adjacente au milieu ambiant, un rétrécissement (bord formant larmier 31).

4. Chambre selon l'une des revendications précédentes, caractérisée en ce que l'enceinte de respiration (11) est reliée à la chambre (6) par l'intermédiaire d'une tubulure de raccord (8) dont le passage constitue l'orifice de respiration (7).

Fig. 1

EP 0 320 606 B1

Fig. 2

Fig. 3

6

Fig.4

EP 0 320 606 B1